# EUROPÄISCHE PATENTSCHRIFT

(11) **EP 0 493 667 B1**
(45) Veröffentlichungstag und Bekanntmachung des Hinweises auf die Patenterteilung: **14.06.1995**
(21) Anmeldenummer: 91119611.1
(22) Anmeldetag: 18.11.1991
(51) Int. Cl.: B29C 47/12, B29C 47/08

(54) **Spritzkopf für einen Extruder**
Extruder head
Tête d'extrusion

(30) Priorität: 15.12.1990 DE 4040125
(43) Veröffentlichungstag der Anmeldung: 08.07.1992
(73) Patentinhaber: Schmidt, Walter, D-31535 Neustadt (DE); Schmidt, Renate, D-31535 Neustadt (DE)
(72) Erfinder: Schmidt, Walter, D-31535 Neustadt (DE); Schmidt, Renate, D-31535 Neustadt (DE)
(74) Vertreter: Junius, Walther, Dr.

(56) Entgegenhaltungen:
- EP-A- 0 347 589
- BE-A- 515 226
- DE-A- 2 545 042
- DE-A- 3 502 020
- FR-A- 2 420 418
- US-A- 4 189 293

## Beschreibung

Die Erfindung betrifft einen Spritzkopf für einen Extruder, bestehend aus einem an der Flanschplatte (2) des Extruderzylinders befestigten Eingangsteil (3), welches einen Abschnitt (4) des das Extrudat zu den Ausformdüsen (22) führenden Kanals umgibt und einen Vorsprung (5) aufweist, in dessen Oberfläche (6) eine Verteilerfläche für das Extrudat als eine Hälfte eines weiteren Abschnittes des Kanals (7) eingeformt ist, einem die Düse(n) (22) umschließenden Endteil (9), der am Vorsprung (5) des Eingangsteiles (3) durch eine Reihe von Schrauben (8) abnehmbar befestigt ist und einem Mittelteil (10), welches von den beiden anderen Teilen (3,9) eingeschlossen ist und auf der dem Vorsprung (5) des Eingangsteiles (3) zugewandten Seite die andere Hälfte des Abschnittes (7) des Kanals zur Extrudatverteilung bildet, wobei das Eingangsteil (3) einen weiteren als Widerlager dienenden Vorsprung (17) am äußeren Ende der Teilungsfläche (13) zwischen Eingangs- und Mittelteil trägt, an dem eine herausnehmbare Leiste (16) als Widerlager befestigt ist.

Ein derartiger Spritzkopf ist aus der DE 25 45 042 bekannt geworden. Dieser Spritzkopf zeichnet sich durch eine relativ einfache Herstellungsmöglichkeit aus. Er hat sich dort, wo mit niedrigen Spritzdrucken zu arbeiten ist, gut bewährt.

Um diesen Spritzkopf sehr schnell bei einem Mischungswèchsel des Extruders öffnen und reinigen zu können, ist es durch die EP 0 347 589 bekannt geworden, die drei Teile dieses Spritzkopfes durch Lenker miteinander zu verbinden und die für ein dichtes Zusammenfügen der drei Teile notwendigen Preßkräfte durch Exzenter zu erzeugen, die auf einer gemeinsamen Welle angeordnet sind und in Löcher der Lenker eingreifen. Diese Ausführung ist allerdings durch notwendige Bohr- und Fräsarbeiten in der Herstellung aufwendiger. Auch ist die Einbringung von Heizelementen und die Anordnung von elektrischen Anschlußelementen durch die bei dieser Ausführung notwendigen Lenker erschwert.

Es gibt nun Anwendungsfälle für diesen Spritzkopf, bei denen ein Mischungswechsel im Extruder nur selten vorkommt, so daß auch der Spritzkopf nur selten für eine Reinigung auseinander genommen zu werden braucht. In diesen Fällen würde es ausreichen, die drei Teile des Spritzkopfes durch Schraubverbindungen miteinander zu verbinden, wie dieses bereits bei der DE 25 45 042 geschieht. Aber auch bei der Anwendung solcher Schraubverbindungen ist es von Wichtigkeit, daß möglichst wenig Schrauben die Teile des Spritzkopfes zusammenhalten, damit für die Demontage und anschließende Montage der Spritzkopfteile nicht zu viel Zeit verbraucht wird. Wenig Schrauben sind aber auch erwünscht, um genügend Anbauraum bzw. Baufläche für das Einbauen elektrischer Heizungen und für das Anbauen von elektrischen Kontakt- und Schaltmitteln zu haben. Gleichzeitig sollen die Schrauben aber so angeordnet sein, daß der Spritzkopf auch mit hohen Spritzdrucken belastet werden kann.

Die Erfindung vermeidet die Nachteile des Standes der Technik. Es ist die Aufgabe der Erfindung, die Teile des Spritzkopfes durch möglichst wenig Schraubverbindungen, aber mit der notwendigen Festigkeit für das Arbeiten bei hohen Spritzdrucken zusammenzufügen und auch genügend Fläche für den Anbau von Zusatzteilen zu gewinnen.

Die Erfindung besteht darin, daß das Mittelteil (10) zwei stumpfwinklig zu dieser Teilungsfläche (13) verlaufende weitere Teilungsflächen (14, 15) aufweist, die an den Vorsprüngen (5, 17) anliegen, daß an beiden seitlichen Enden des Mittelteiles (10) durch in diesem eingebrachte Löcher Schraubbolzen (26) etwa senkrecht zur Ebene der Verteilerfläche (6) in den Vorsprung (5) am Eingangsteil (3) eingreifen, daß senkrecht zur Teilungsfläche (13) zwischen Eingangs-(3) und Mittelteil (10) Schrauben (12) im Mittelabschnitt diese beiden Teile (3,10) miteinander verbinden, und daß das Endteil (9) mit einer weiteren Reihe von Schrauben (11) am Mittelteil (10) befestigt ist.

Durch die Anordnung von schraubbolzen an den beiden seitlichen Enden des Mittelteiles und durch die Anordnung einiger weiterer Schrauben lediglich im Mittelteil sowie durch die beiden Reihen von Schrauben im Endteil wird eine sehr feste Verbindung der drei Teile miteinander erzielt, welche aber nur wenig Raum und Oberfläche einnimmt. Diese Ausführungsform der Befestigung gestattet es, Bohrungen und Fräsungen für das Einbringen von Heizpatronen einbringen zu können und die elektrischen Schaltmittel auf freien Oberflächen montieren zu können.

Vorteilhaft ist es, wenn im Mittelteil eine Ausnehmung für die Aufnahme einer Verteilerinsel eingearbeitet ist, welche von das Mittelteil durchsetzenden Schrauben gehalten ist. Der Einbau und die Anordnung der Schrauben zum Halten der Verteilerinsel wird durch die vorgenannte Befestigungsart der drei Spritzkopfteile miteinander durch Schraubverbindungen erleichtert.

Vorteilhaft ist es, wenn auf der Außenfläche des Mittelteiles und des Eingangsteiles elektrische Kontakt- und/oder Schaltmittel vorzugsweise auf Distanzsäulen in Form von Schraubbolzen aufgebaut sind. Diese Distanzsäulen sichern, daß nur wenig Wärme von dem Spritzkopf auf die Kontakt- und Schaltmittel übertreten kann. Die Schraubbolzen geben dabei einfach herzustellende Distanzsäulen ab.

Zweckmäßig ist es, wenn die senkrecht zur Teilungsfläche zwischen Eingangs- und Mittelteil angeordneten Schrauben Inbusschrauben sind, deren Köpfe an Absätzen in den diese Schrauben aufnehmenden Löchern anliegen.

Vorteilhaft ist es, wenn die am Widerlager angeschraubte Leiste aus einem Material höheren Ausdehungskoeffizienten als der anderen Teile gefertigt ist, um erhöhte Abdichtungsfunktionen übernehmen zu können.

Das Wesen der vorliegenden Erfindung ist nachstehend anhand eines in der Zeichnung schematisch dargestellten Ausführungsbeispielen näher erläutert. Es zeigen:

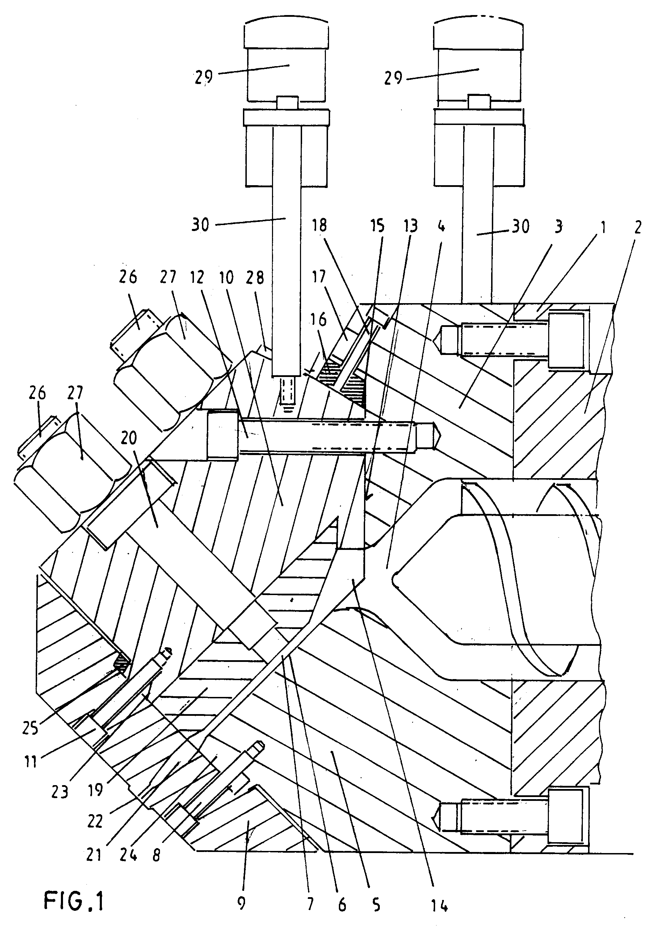

Fig. 1 einen Schnitt durch den Spritzkopf,

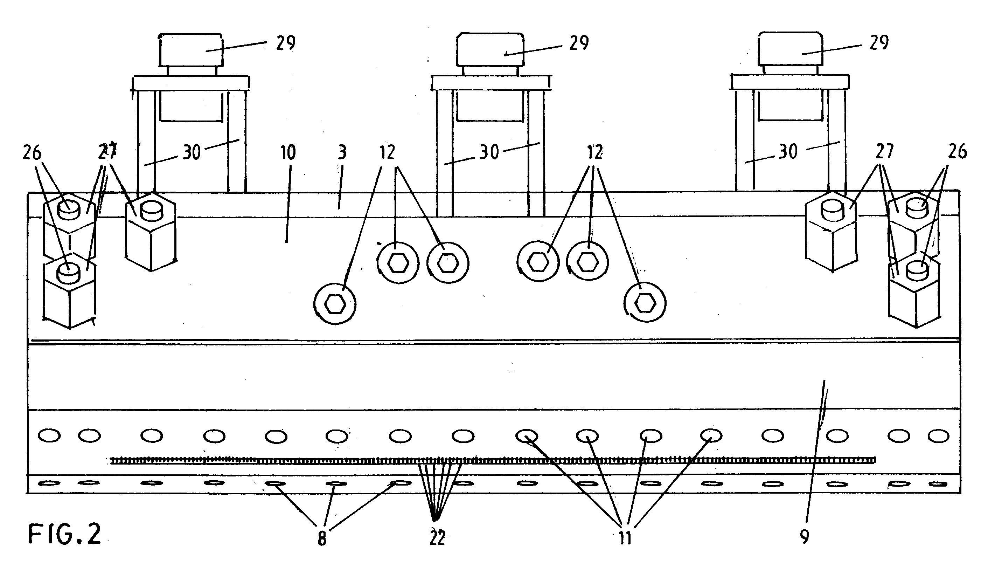

Fig. 2 eine Ansicht des Spritzkopfes.(verkleinert 1:2)

Der Spritzkopf ist aus drei Hauptteilen zusammengebaut: Einem am Flansch 1 des Extruderzylinders 2 angeschraubten Eingangsteil 3, welches den Kanalabschnitt 4 umschließt und im unteren Bereich einen Vorsprung 5 aufweist, in dessen Oberfläche 6 der anschließende Kanalabschnitt 7 mit seiner unteren Konfiguration eingeformt ist. Mit den Schrauben 8 ist an diesen Vorsprung 5 des Eingangsteiles 3 das Endteil 9 angeschraubt. Oberhalb dieses Vorsprunges 5 befindet sich zwischen dem Endteil 9 und dem Eingangsteil 3 das Mittelteil 10, welches mit den Schrauben 11 mit dem Endteil 9 verschraubt ist und mit den Inbusschrauben 12 mit dem Eingangsteil 3 verschraubt ist, welche vorzugsweise senkrecht zur Teilungsfläche 13 zwischen dem Mittelteil 10 und dem Eingangsteil 3 stehen. Diese Teilungsfläche 13 setzt sich nach unten in eine stumpfwinklig anschließende Teilungsfläche 14 zwischen dem Mittelteil 10 und dem Vorsprung 5 des Eingangsteiles 3 fort, während sich nach oben hin an die Teilungsfläche 13 eine Teilungsfläche 15 stumpfwinklig anschließt, die an einer Leiste 16 anliegt, die ihrerseits an einem weiteren Vorsprung 17 anliegt und mittels der Schrauben 18 an diesem Vorsprung befestigt ist. Das Mittelteil kann an seiner dem Kanalabschnitt 7 zugewandten Seite mit einer Verdrängerinsel 19 versehen sein, die mittels Schrauben 20 am Mittelteil 10 befestigt ist. Der Kanalabschnitt 7 setzt sich in den Kanalabschnitt 21 im Endteil 9 fort. Dieser Kanalabschnitt 21 endet in den Düsen 22. Das Mittelteil 10 und der Vorsprung 5 weisen auf der dem Endteil 9 zugekehrten Seite je einen Vorsprung 23, 24 auf, die in eine entsprechende Ausnehmung des Endteiles 9 eingreifen. Die Vorsprünge 23, 24 weisen dabei schräge Seitenkanten auf, die mit entsprechenden schrägen Seitenkanten der Ausnehmung im Endteil 9 zusammenwirken. Hier kann eine Leiste 25 eingelegt sein.

Das Mittelteil 10 ist an seinen beiden Seiten mit Hilfe von in den Vorsprung 5 eingreifende, genähert senkrecht zur Teilungsfläche 14 stehende Schraubbolzen und Muttern befestigt. Diese Befestigung mittels Schraubbolzen 26 und Muttern 27 erfolgt nur an den Seiten, in der Mitte hingegen sind einige Inbusschrauben 12 angeordnet, die das Mittelteil mit dem Eingangsteil verschrauben, wobei sie die Teilungsfläche 13 durchsetzen. Auf diese Weise ist erreicht, daß mit nur wenigen Schrauben eine sehr feste Verbindung der Teile des Spritzkopfes erzielt ist, so daß erhebliche freie Baufläche für das Einbringen von Heizpatronen 28 und das Aufstellen von elektrischen Schaltmitteln 29 auf Distanzsäulen 30 vorhanden ist. Diese Heizpatronen 28 und Distanzsäulen 30 sind nicht nur auf dem Mittelteil 10, sondern auch auf dem Eingangsteil 3 aufgebaut.

## Patentansprüche

1. Spritzkopf für einen Extruder,
bestehend aus einem an der Flanschplatte (2) des Extruderzylinders befestigten Eingangsteil (3), welches einen Abschnitt (4) des das Extrudat zu den Ausformdüsen (22) führenden Kanals umgibt und einen Vorsprung (5) aufweist, in dessen Oberfläche (6) eine Verteilerfläche für das Extrudat als eine Hälfte eines weiteren Abschnittes des Kanals (7) eingeformt ist, einem die Düse(n) (22) umschließenden Endteil (9), der am Vorsprung (5) des Eingangsteiles (3) durch eine Reihe von Schrauben (8) abnehmbar befestigt ist und einem Mittelteil (10), welches von den beiden anderen Teilen (3,9) eingeschlossen ist und auf der dem Vorsprung (5) des Eingangsteiles (3) zugewandten Seite die andere Hälfte des Abschnittes (7) des Kanals zur Extrudatverteilung bildet, wobei das Eingangsteil (3) einen weiteren als Widerlager dienenden Vorsprung (17) am äußeren Ende der Teilungsfläche (13) zwischen Eingangs- und Mittelteil trägt, an dem eine herausnehmbare Leiste (16) als Widerlager befestigt ist, dadurch gekennzeichnet, daß das Mittelteil (10) zwei stumpfwinklig zu dieser Teilungsfläche (13) verlaufende weitere Teilungsflächen (14, 15) aufweist, die an den Vorsprüngen (5, 17) anliegen,
daß an beiden seitlichen Enden des Mittelteiles (10) durch in diesem eingebrachte Löcher Schraubbolzen (26) etwa senkrecht zur Ebene der Verteilerfläche (6) in den Vorsprung (5) am Eingangsteil (3) eingreifen,
daß senkrecht zur Teilungsfläche (13) zwischen Eingangs-(3) und Mittelteil (10) Schrauben (12) im Mittelabschnitt diese beiden Teile (3,10) miteinander verbinden,
und daß das Endteil (9) mit einer weiteren Reihe von Schrauben (11) am Mittelteil (10) befestigt ist.

2. Spritzkopf nach Anspruch 1,
dadurch gekennzeichnet,
daß im Mittelteil (10) eine Ausnehmung für die Aufnahme einer Verdrängerinsel (19) eingearbeitet ist, welche von das Mittelteil (10) durchsetzenden Schrauben (20) gehalten ist.

3. Spritzkopf nach Anspruch 1,
dadurch gekennzeichnet,
daß auf der Außenfläche des Mittelteiles (10) und/oder des Eingangsteiles (3) elektrische Kontakt- und/oder Schaltmittel (29) vorzugsweise auf Distanzsäulen (30) in Form von Schraubbolzen aufgebaut sind.

4. Spritzkopf nach Anspruch 1,
dadurch gekennzeichnet,
daß die senkrecht zur Teilungsfläche (13) zwischen Eingangs-(3) und Mittelteil (10) angeordneten Schrauben (12) Inbusschrauben sind, deren Köpfe an Absätzen in den diese Schrauben aufnehmenden Löchern anliegen.

5. Spritzkopf nach Anspruch 1,
dadurch gekennzeichnet,
daß die am Widerlager (17) angeschraubte Leiste (16) aus einem Material höheren Ausdehnungskoeffizienten als der anderen Teile gefertigt ist.

## Claims

1. Extrusion head for an extruder, consisting of an inlet part (3) which is fixed to the flange plate (2) of the extruder cylinder, surrounds a portion (4) of the passage conveying the extrusion material to the shaping nozzles (22) and exhibits a projection (5) in the surface (6) of which is formed a distribution face for the extrusion material as one half of a further portion of the passage (7), an end part (9) which surrounds the nozzle(s) (22) and is secured detachably to the projection (5) of the inlet part (3) by a series of screws (8), and a middle part (10) which is enclosed by the other two parts (3, 9) and on the side facing the projection (5) of the inlet part (3) forms the other half of the portion (7) of the passage for distribution of the extrusion material, the inlet part (3) carrying another projection (17) serving as support on the outer end of the dividing face (13) between the inlet and middle parts, to which a removable strip (16) is secured as support, characterised in that the middle part (10) exhibits two further dividing faces (14, 15) running at an obtuse angle to this dividing face (13) and bearing on the projections (5, 17).

2. Extrusion head according to claim 1, characterised in that in the middle part (10) there is a recess for accommodation of a displacing island (19) which is held by screws (20) passing through the middle part (10).

3. Extrusion head according to claim 1, characterised in that electric contact and/or switching means (29) are provided on the external face of the middle part (10) and/or the inlet part (3) preferably on spacer pillars (30) in the form of threaded studs.

4. Extrusion head according to claim 1, characterised in that the screws (12) disposed at right angles to the dividing face (13) between the inlet part (3) and the middle part (10) are hexagon socket head screws the heads of which bear on shoulders in the holes accommodating these screws.

5. Extrusion head according to claim 1, characterised in that the strip (16) screwed to the support (17) is made of a material with a higher co-efficient of expansion than the other parts.

## Revendications

1. Tête d'injection pour une extrudeuse, consistant en une pièce d'entrée (3) fixée à La plaque de bride (2) du cylindre d'extrudeuse, laquelle pièce d'entrée entoure un tronçon (4) du canal conduisant l'extrudat aux buses de formage (22) et présente une saillie (5) dans la surface (6) de laquelle est formée une surface de distribution pour l'extrudat sous forme d'une moitié d'un autre tronçon du canal (7), en une pièce extrême (9) entourant la ou les buses (22), laquelle pièce extrême est fixée de façon amovible à la saillie (5) de la pièce d'entrée (3) par une rangée de vis (8), et en une pièce centrale (10) qui est entourée par les deux autres pièces (3,9) et constitue l'autre moitié du tronçon (7) du canal de distribution de l'extrudat, du côté tourné vers la saillie (5) de la pièce d'entrée (3), la pièce d'entrée (3) portant une autre saillie (17), servant de butée, à l'extrémité extérieure de la surface (13) de séparation entre la pièce d'entrée et la pièce centrale, saillie sur laquelle est fixée, en tant que butée, une baguette (16) amovible, caractérisée en ce que la pièce centrale (10) présente deux autres surfaces (14,15) de séparation s'étendant à angle obtus par rapport à cette surface (13) de séparation et qui s'appuient sur les saillies (5,17).

2. Tête d'injection selon la revendication 1, caractérisée en ce que dans la pièce centrale (10) est aménagé un évidement pour la réception d'un ilôt de refoulement (19), qui est tenu par des vis (20) traversant la pièce centrale (10).

3. Tête d'injection selon la revendication 1, caractérisée en ce que sur la surface extérieure de la pièce centrale (10) et/ou de la pièce d'entrée (3) sont montés des moyens électriques de contact et/ou de commutation (29), de préférence sur des colonnes d'espacement (30) en forme de boulons.

4. Tête d'injection selon la revendication 1, caractérisée en ce que les vis (12) disposées perpendiculairement à la surface de séparation (13) entre la pièce d'entrée (3) et la pièce centrale (10) sont des vis à six pans creux, dont les têtes s'appuient sur des gradins dans les trous recevant ces vis.

5. Tête d'injection selon la revendication 1, caractérisée en ce que la baguette (16) vissée sur la butée (17) est fabriquée en un matériau présentant un coefficient de dilatation supérieur à celui des autres pièces.
